# EUROPÄISCHE PATENTSCHRIFT

(11) **EP 3 857 624 B1**
(45) Veröffentlichungstag und Bekanntmachung des Hinweises auf die Patenterteilung: **15.01.2025**
(21) Anmeldenummer: 19783449.2
(22) Anmeldetag: 25.09.2019
(51) Int. Cl.: H01M 10/0525, H01M 50/209, H01M 50/291, H01M 50/503, H01M 10/54

(54) **BATTERIEMODUL UND VERFAHREN ZUM HERSTELLEN DESSELBEN**
BATTERY MODULE AND METHOD FOR PRODUCING SAME
MODULE DE BATTERIE ET PROCÉDÉ DE FABRICATION DUDIT MODULE

(30) Priorität: 27.09.2018 DE 102018123893
(43) Veröffentlichungstag der Anmeldung: 04.08.2021
(73) Patentinhaber: Maltoni, Francesco, 52064 Aachen (DE)
(72) Erfinder: Maltoni, Francesco, 52064 Aachen (DE)
(74) Vertreter: Bauer, Dirk
(86) Internationale Anmeldenummer: PCT/EP2019/075816
(87) Internationale Veröffentlichungsnummer: WO 2020/064807

(56) Entgegenhaltungen:
- EP-A1- 3 264 493
- EP-A1- 3 340 338
- US-A1- 2013 052 496

## Beschreibung

Die Erfindung betrifft zunächst ein Batteriemodul mit einem Stapel flacher Batteriezellen und einem Halter für die Batteriezellen, wobei jede der Batteriezellen eine Kontaktfahne aufweist, die durch den Halter hindurch zu einer Kopfseite des Batteriemoduls geführt ist, und wobei die Kontaktfahnen auf der Kopfseite an einer Verbindungsstelle miteinander verbunden sind. Die Erfindung betrifft weiterhin ein Verfahren zum Herstellen eines Batteriemoduls, wobei ein Stapel flacher Batteriezellen, die je eine Kontaktfahne aufweisen, in einem Halter gehaltert wird und die Kontaktfahnen durch den Halter hindurch zu einer Kopfseite des Batteriemoduls geführt und an einer Verbindungsstelle miteinander verbunden werden. Die Dokumente EP3264493, E3340338 und US2013/052496 offenbaren Batteriemodule mit mehreren Batteriezellen und Rahmenelemente.

US 2015/037649 A1 schlägt vor, in einem solchen Batteriemodul und einem Verfahren zu dessen Herstellung die Kontaktfahnen durch Klemmelemente lösbar miteinander zu verbinden, um die Kontaktfahne zur Wiederverwendung einer gebrauchten Batteriezelle in einem neuen Batteriemodul zu erhalten. Zuvor wurden die Kontaktfahnen üblicher Weise verschweißt: Zur Entsorgung des Batteriemoduls wurden die Verbindungsstellen aufgeschnitten um die Batteriezellen vom Halter zu trennen. Durch die reduzierte Länge der Kontaktfahne konnten die Batteriezellen anschließend nicht in einem neuen Batteriemodul weiterverwendet werden.

Klemmverbindungen erfordern einen hohen technischen Aufwand und insbesondere bei der Herstellung elektrischer Verbindungen in Batteriemodulen eine hohe Präzision, um die verlustfreie Leistungsübertragung dauerhaft zu gewährleisten. Sie sind zudem besonders in zur Umgebung offenen Einbausituationen anfällig für Korrosion.

### Aufgabe

Der Erfindung liegt die Aufgabe zugrunde, die Nachteile des bekannten Stands der Technik bei der Wiederverwendung gebrauchter Batteriezellen zu vermeiden.

### Lösung

Ausgehend von dem bekannten Batteriemodul wird nach der Erfindung vorgeschlagen, dass die Kontaktfahnen ausgehend von den Batteriezellen zu der Verbindungsstelle sich mindestens abschnittsweise von der Verbindungsstelle entfernen. Die Kontaktfahnen der Batteriezellen des erfindungsgemäßen Batteriemoduls weisen durch die mäandrierende Verlegung eine freie Reservelänge auf. Nach Ausschneiden der Verbindungstelle kann die Batteriezelle unter Ausnutzung dieser Reservelänge weiterverwendet werden.

Vorzugsweise besteht in einem erfindungsgemäßen Batteriemodul der Halter aus einem Stapel von Distanzelementen, wobei in Zwischenräumen zwischen benachbarten Distanzelementen je eine der Batteriezellen gehaltert ist. Ein derart gestapelter Aufbau von Batteriemodulen ist allgemein bekannt und bewährt.

Vorzugsweise begrenzen in einem erfindungsgemäßen Batteriemodul benachbarte Distanzelemente jeweils einen Kanal für eine der Kontaktfahnen, der die Kontaktfahne Richtung führt. Der Kanal erleichtert die Montage des Batteriemoduls, weil die Kontaktfahnen während des Stapelns durch die Geometrie der Kanäle geformt werden.

Vorzugsweise sind die Batteriezellen in einem erfindungsgemäßen Batteriemodul Lithium-Ionen-Akkumulatoren. Derartige Batteriemodule sind allgemein bekannt und bewährt.

Vorzugsweise sind in einem erfindungsgemäßen Batteriemodul jeweils Kontaktfahnen von bis zu vier der Batteriezellen miteinander verbunden. Die verbundenen Batteriezellen werden so parallel geschaltet. In einem erfindungsgemäßen Batteriemodul können Gruppen von derart parallel geschalteten Batteriezellen oder alternativ auch einzelne Batteriezellen in Serie geschaltet werden.

Vorzugsweise sind in einem erfindungsgemäßen Batteriemodul die Kontaktfahnen an der Verbindungsstelle miteinander verschweißt. Die Nachteile einer Klemmverbindung sind so vermieden.

Eine Batteriezelle aus einem erfindungsgemäßen Batteriemodul kann wiederverwendet werden, indem die Verbindungsstelle ausgeschnitten und die Batteriezelle in einem weiteren Halter eines weiteren Batteriemoduls gehaltert und durch den weiteren Halter hindurch zu einer Kopfseite des weiteren Batteriemoduls geführt wird, wobei die Kontaktfahne mindestens teilweise gestreckt und an einer weiteren Verbindungsstelle mit Kontaktfahnen weiterer Batteriemodule verbunden wird.

Ausgehend von dem bekannten Verfahren wird nach der Erfindung vorgeschlagen, dass die Kontaktfahnen ausgehend von den Batteriezellen zu der Verbindungsstelle sich mindestens abschnittsweise von der Verbindungsstelle entfernend verlegt werden. Ein erfindungsgemäßes Verfahren dient der Herstellung eines erfindungsgemäßes Batteriemodul der zuvor beschriebenen Art und zeichnet sich gleichfalls durch dessen Vorteile aus.

Vorzugsweise werden in einem erfindungsgemäßen Verfahren jeweils abwechselnd ein Distanzelement und eine der Batteriezellen derart aufeinander gelegt, dass die Distanzelemente den Halter bilden und die Batteriezellen in Zwischenräumen zwischen benachbarten Distanzelementen gehaltert werden. Ein derart sequentieller Aufbau von Batteriemodulen ist allgemein bekannt und bewährt.

Vorzugsweise begrenzen in einem erfindungsgemäßen Verfahren benachbarte Distanzelemente jeweils einen Kanal für eine der Kontaktfahnen, wobei die Kontaktfahne durch das aufeinander Legen der Distanzelemente in die der Verbindungsstelle abgewandte Richtung gezwungen wird. Der Verlauf der Kontaktfahne wird so ohne zusätzlichen Arbeitsschritt bestimmt.

### Ausführungsbeispiel

Die Erfindung wird nachfolgend anhand eines Ausführungsbeispiels erläutert. Es zeigen
- Fig. 1a/b: zwei Ansichten des Halters eines erfindungsgemäßen Batteriemoduls,

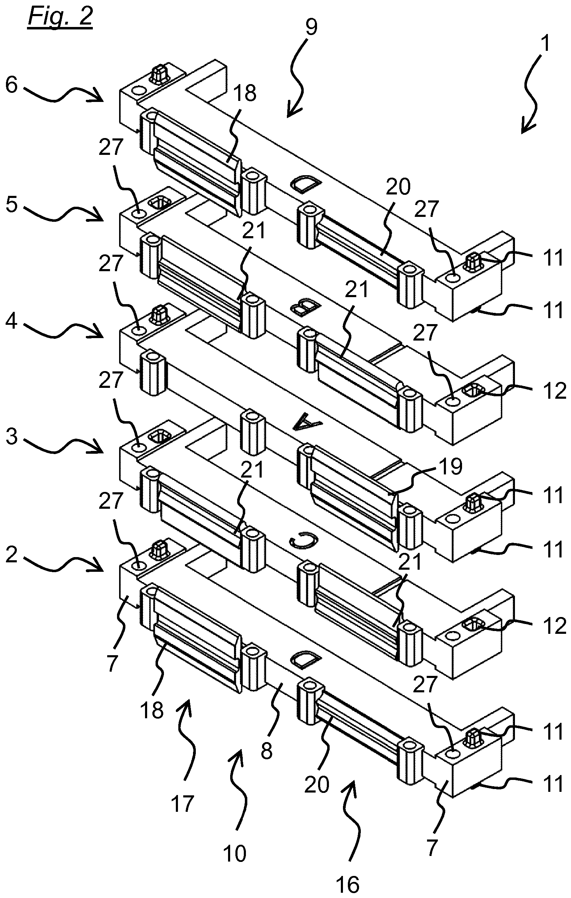

- Fig. 2: eine Explosionsdarstellung des erfindungsgemäßen Halters,

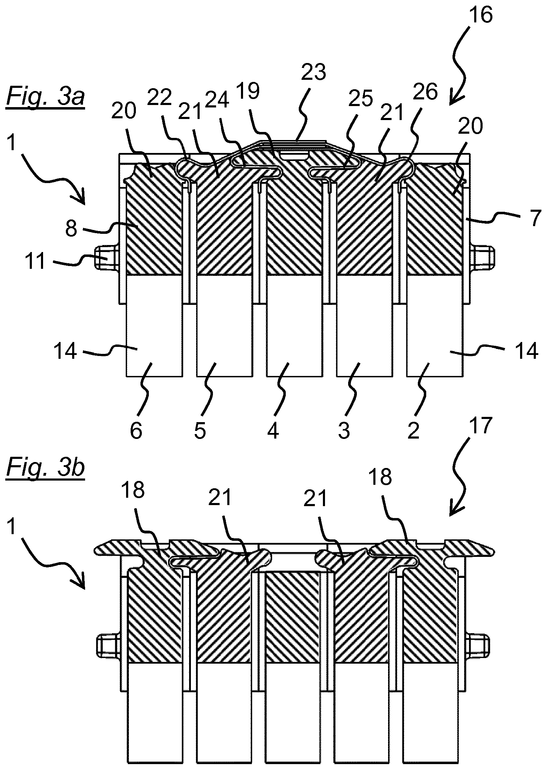

- Fig. 3a/b: zwei Schnittdarstellungen des erfindungsgemäßen Halters und
- Fig. 4a/b: zwei Ansichten des Halters eines weiteren Batteriemoduls,
- Fig. 5: eine Explosionsdarstellung des weiteren Halters,
- Fig. 6a/b: zwei Schnittdarstellungen des weiteren Halters.

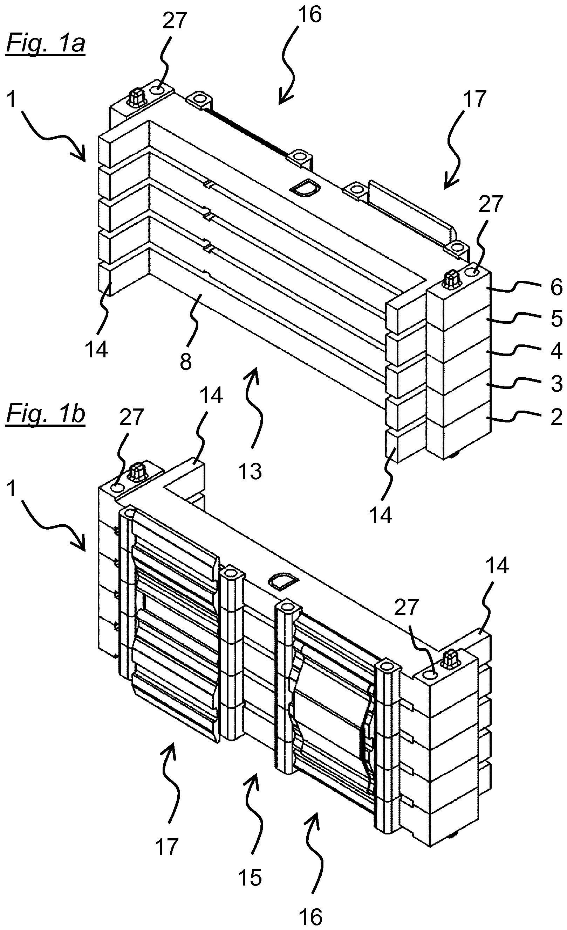

Der in den Figuren 1 a/b, 2 und 3a/b gezeigte Halter 1 eines nicht weiter dargestellten erfindungsgemäßen Batteriemoduls mit vier parallel geschalteten Batteriezellen besteht aus fünf Distanzelementen 2, 3, 4, 5, 6 aus Kunststoff.

Die Distanzelemente 2, 3, 4, 5, 6 weisen jeweils zwei seitliche Lagerblöcke 7 auf, die mittels einer Brücke 8 verbunden sind. Die Lagerblöcke 7 weisen jeweils auf ihren Oberseiten 9 und Unterseiten 10 entweder Raststifte 11 oder Vertiefungen 12 auf, in denen die Raststifte 11 bei der Montage des Batteriemoduls einrasten.

Die Brücken 8 weisen jeweils auf der Innenseite 13 des Halters an die Blöcke angrenzend Lager 14 für die Batteriezellen auf. Auf der Außenseite 15 sind in zwei Verbindungsebenen 16, 17 elektrisch isolierende Schweißschienen 18, 19 oder Formschienen 20, 21 angebracht.

Zur Herstellung des erfindungsgemäßen Batteriemoduls wird eine erste Batteriezelle auf ein erstes Distanzelement 2 aufgelegt, das in der ersten Verbindungsebene 16 eine erste Formschiene 20 und in der zweiten Verbindungsebene 17 eine erste Schweißschiene 18 aufweist. Die Kontaktfahne 22 des ersten Batteriemoduls wird über die Formschiene 20 des ersten Distanzelements 2 zu der Außenseite 15 geführt.

Dann wird ein zweites Distanzelement 3 mit zwei identischen zweiten Formschienen 21 in den beiden Verbindungsebenen 16, 17 aufgelegt. Zwischen der ersten Formschiene 20 des ersten Distanzelements 2 und dem zweiten Formschiene 21 in der ersten Verbindungsebene 16 wird die Kontaktfahne 22 der ersten Batteriezelle zunächst nach unten in die der Verbindungsstelle 23 abgewandte Richtung gezwungen. Auf das zweite Distanzelement 3 wird eine zweite Batteriezelle aufgelegt.

Dann wird ein drittes Distanzelement 4 aufgelegt, dass ausschließlich eine zweite Schweißschiene 19 in der ersten Verbindungsebene 16 aufweist. Die Kontaktfahne 24 der zweiten Batteriezelle wird zwischen der zweiten Formschiene 21 des zweiten Distanzelements 3 und der zweiten Schweißschiene 19 nach unten in die der Verbindungsstelle 23 abgewandte Richtung gezwungen. Auf das dritte Distanzelement 4 wird eine dritte Batteriezelle aufgelegt.

Dann wird ein viertes Distanzelement 5 aufgelegt, das zwei spiegelbildlich zu dem zweiten Distanzelement 3 angeordnete zweite Formschienen 21 aufweist. Die Kontaktfahne 25 der dritten Batteriezelle wird in der ersten Verbindungsebene 16 zwischen der zweiten Schweißschiene 19 des dritten Distanzelements 4 und der zweiten Formschiene 21 des vierten Distanzelements 5 nach oben in die der Verbindungsstelle 23 abgewandte Richtung gezwungen. Auf das vierte Distanzelement 5 wird eine vierte Batteriezelle aufgelegt.

Schließlich wird ein fünftes Distanzelement6 aufgelegt, das dem ersten Distanzelement 2 entspricht. Die Kontaktfahne 26 der vierten Batteriezelle wird in der ersten Verbindungsebene 16 zwischen der zweiten Formschiene 21 des vierten Distanzelements 5 und der ersten Formschiene 20 des fünften Distanzelements 6 nach oben in die der Verbindungsstelle 23 abgewandte Richtung gezwungen.

In dem Halter 1 liegen die Lagerblöcke 7 der Distanzelemente 2, 3, 4, 5, 6 aufeinander auf. Die Batteriezellen werden mittels einer nicht dargestellten Zugschraube, die durch zwei durchgehende Bohrungen 27 in den Blöcken geführt wird, zwischen den Brücken 8 und den Lagern 14 eingeklemmt. Schließlich werden die Kontaktfahnen 22, 24, 25, 26 aller vier Batteriezellen händisch über die zweite Schweißschiene 19 des dritten Distanzelements 4 gebogen und dort verschweißt.

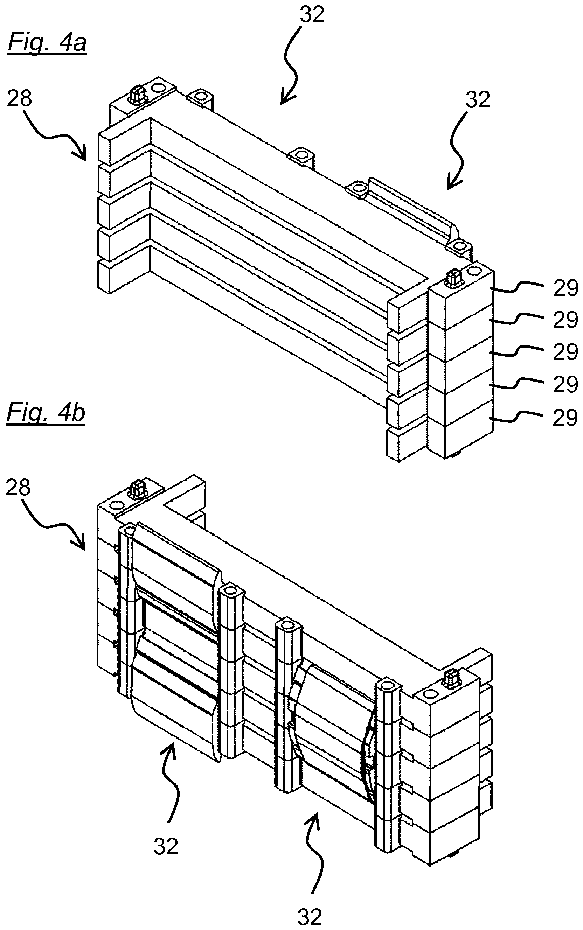

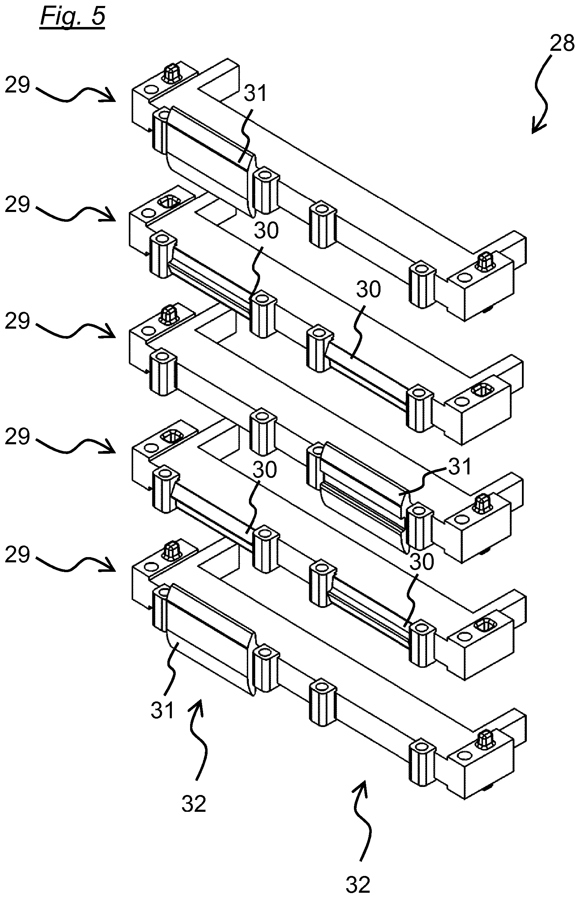

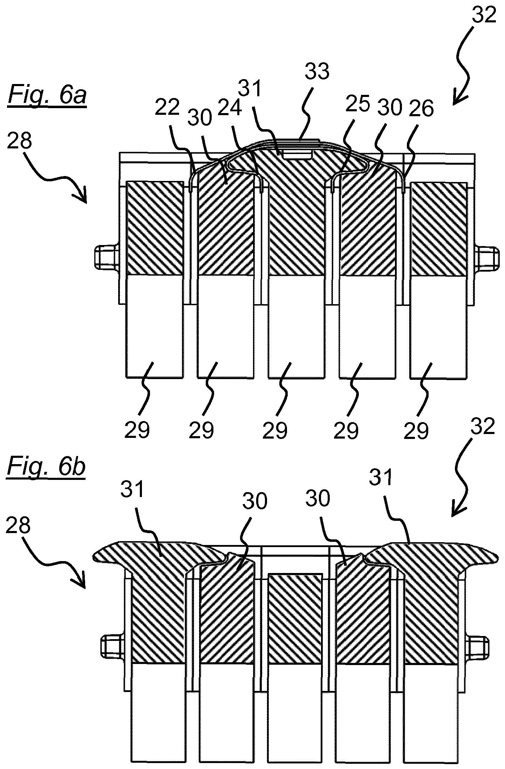

Zur Entsorgung eines verbrauchten erfindungsgemäßen Batteriemoduls wird die Verbindungsstelle 23 herausgetrennt, die vier Batteriemodule können aufbereitet und mittels des in den Figuren 4a/b, 5 und 6a/b gezeigten weiteren Halters 28 zu einem wiederum nicht weiter dargestellten weiteren Batteriemodul neu zusammengestellt werden. Der weitere Halter besteht gleichfalls aus fünf Distanzelementen 29 mit Formschienen 30 und Schweißschienen 31 in zwei Verbindungebenen 32.

Gegenüber dem erfindungsgemäßen Halter 1 werden in dem weiteren Halter die Kontaktfahnen 22, 24, 25, 26 in den Kanälen zwischen den Formschienen 30 und den Schweißschienen 31 in kleineren Abschnitten oder garnicht in eine der Verbindungsstelle 33 abgewandte Richtung verlegt. Die durch das Heraustrennen der Verbindungsstelle 23 des erfindungsgemäßen Batteriemoduls gekürzten Kontaktfahnen 22, 24, 25, 26 können so in der Verbindungsstelle 33 des weiteren Halters 28 erneut verschweißt werden.

Da die Distanzelemente 2, 3, 4, 5, 6 des ersten Halters 1 und die Distanzelemente 29 des zweiten Halters 28 großflächig unter hohem Druck mit den Batteriezellen in Kontakt stehen, führen sie die darin entstehende Wärme sehr homogen zu der Außenseite 15 ab. Ergänzend kann an der Außenseite 15 ein nicht dargestelltes Kühlelement angebracht werden. Die Lebensdauer des erfindungsgemäßen Batteriemoduls ist gegenüber dem Stand der Technik dadurch erhöht.

In den Figuren sind
- 1: Halter
- 2: erstes Distanzelement
- 3: zweites Distanzelement
- 4: drittes Distanzelement
- 5: viertes Distanzelement
- 6: fünftes Distanzelement
- 7: Lagerblock
- 8: Brücke
- 9: Oberseite
- 10: Unterseite
- 11: Raststift
- 12: Vertiefung
- 13: Innenseite
- 14: Lager
- 15: Außenseite
- 16: erste Verbindungsebene
- 17: zweite Verbindungsebene
- 18: erste Schweißschiene
- 19: zweite Schweißschiene
- 20: erste Formschiene
- 21: zweite Formschiene
- 22: erste Kontaktfahne
- 23: Verbindungsstelle
- 24: zweite Kontaktfahne
- 25: dritte Kontaktfahne
- 26: vierte Kontaktfahne
- 27: Bohrung
- 28: Halter
- 29: Distanzelement
- 30: Formschiene
- 31: Schweißschiene
- 32: Verbindungsebene
- 33: Verbindungsstelle

## Patentansprüche

1. Batteriemodul mit einem Stapel flacher Batteriezellen und einem Halter (1) für die Batteriezellen, wobei jede der Batteriezellen eine Kontaktfahne (22, 24, 25, 26) aufweist, die durch den Halter (1) hindurch zu einer Kopfseite des Batteriemoduls geführt ist, und wobei die Kontaktfahnen (22, 24, 25, 26) auf der Kopfseite an einer Verbindungsstelle (23) miteinander verbunden sind, ***dadurch gekennzeichnet, dass*** die Kontaktfahnen (22, 24, 25, 26) ausgehend von den Batteriezellen zu der Verbindungsstelle (23) sich mindestens abschnittsweise von der Verbindungsstelle (23) entfernen.

2. Batteriemodul nach dem vorgenannten Anspruch, ***dadurch gekennzeichnet, dass*** der Halter (1) aus einem Stapel von Distanzelementen (2, 3, 4, 5, 6) besteht, wobei in Zwischenräumen zwischen benachbarten Distanzelementen (2, 3, 4, 5, 6) je eine der Batteriezellen gehaltert ist.

3. Batteriemodul nach dem vorgenannten Anspruch, ***dadurch gekennzeichnet, dass*** benachbarte Distanzelemente (2, 3, 4, 5, 6) jeweils einen Kanal für eine der Kontaktfahnen (22, 24, 25, 26) begrenzen, der die Kontaktfahne (22, 24, 25, 26) führt.

4. Batteriemodul nach einem der vorgenannten Ansprüche, ***dadurch gekennzeichnet, dass*** die Batteriezellen Lithium-Ionen-Akkumulatoren sind.

5. Batteriemodul nach einem der vorgenannten Ansprüche, ***dadurch gekennzeichnet, dass*** jeweils Kontaktfahnen (22, 24, 25, 26) von bis zu vier der Batteriezellen miteinander verbunden sind.

6. Batteriemodul nach einem der vorgenannten Ansprüche, ***dadurch gekennzeichnet, dass*** die Kontaktfahnen (22, 24, 25, 26) an der Verbindungsstelle (23) miteinander verschweißt sind.

7. Verfahren zum Wiederverwerten einer Batteriezelle aus einem Batteriemodul nach einem der vorgenannten Ansprüche, ***dadurch gekennzeichnet, dass*** die Verbindungsstelle (23) ausgeschnitten und die Batteriezelle in einem weiteren Halter (28) eines weiteren Batteriemoduls gehaltert und durch den weiteren Halter (28) hindurch zu einer Kopfseite des weiteren Batteriemoduls geführt wird, wobei die Kontaktfahne (22, 24, 25, 26) mindestens teilweise gestreckt und an einer weiteren Verbindungsstelle (33) mit Kontaktfahnen (22, 24, 25, 26) weiterer Batteriemodule verbunden wird.

8. Verfahren zum Herstellen eines Batteriemoduls, wobei ein Stapel flacher Batteriezellen, die je eine Kontaktfahne (22, 24, 25, 26) aufweisen, in einem Halter (1) gehaltert wird und die Kontaktfahnen (22, 24, 25, 26) durch den Halter (1) hindurch zu einer Kopfseite des Batteriemoduls geführt und an einer Verbindungsstelle (23) miteinander verbunden werden, ***dadurch gekennzeichnet, dass*** die Kontaktfahnen (22, 24, 25, 26) ausgehend von den Batteriezellen zu der Verbindungsstelle (23) sich mindestens abschnittsweise von der Verbindungsstelle (23) entfernend verlegt werden.

9. Verfahren nach dem vorgenannten Anspruch, ***dadurch gekennzeichnet, dass*** jeweils abwechselnd ein Distanzelement (2, 3, 4, 5, 6) und eine der Batteriezellen derart aufeinander gelegt werden, dass die Distanzelemente (2, 3, 4, 5, 6) den Halter (1) bilden und die Batteriezellen in Zwischenräumen zwischen benachbarten Distanzelementen (2, 3, 4, 5, 6) gehaltert werden.

10. Verfahren nach dem vorgenannten Anspruch, ***dadurch gekennzeichnet, dass*** benachbarte Distanzelemente (2, 3, 4, 5, 6) jeweils einen Kanal für eine der Kontaktfahnen (22, 24, 25, 26) begrenzen, wobei die
Kontaktfahne (22, 24, 25, 26) durch das aufeinander Legen der Distanzelemente (2, 3, 4, 5, 6) in die der Verbindungsstelle (23) abgewandte Richtung gezwungen wird.

## Claims

1. A battery module with a stack of flat battery cells, and a mounting (1) for the battery cells, wherein each of the battery cells has a contact tab (22, 24, 25, 26), which is led through the mounting (1) to a head side of the battery module, and wherein the contact tabs (22, 24, 25, 26) are connected to each other on the head side at a junction (23), **characterised in that**, the contact tabs (22, 24, 25, 26), are routed from the battery cells to the junction (23), such that, at least in some sections, they move away from the junction (23).

2. The battery module in accordance with the preceding claim, **characterised in that**, the mounting (1) consists of a stack of spacer elements (2, 3, 4, 5, 6), wherein one of the battery cells is mounted in each of the spaces between neighbouring spacer elements (2, 3, 4, 5, 6).

3. The battery module in accordance with the preceding claim, **characterised in that**, neighbouring spacer elements (2, 3, 4, 5, 6) in each case define a channel for one of the contact tabs (22, 24, 25, 26), which guides the contact tab (22, 24, 25, 26).

4. The battery module in accordance with one of the preceding claims, **characterised in that**, the battery cells are lithium-ion accumulators.

5. The battery module in accordance with one of the preceding claims, **characterised in that**, contact tabs (22, 24, 25, 26) of up to four of the battery cells are connected to each other.

6. The battery module in accordance with one of the preceding claims, **characterised in that**, the contact tabs (22, 24, 25, 26) are welded together at the junction (23).

7. A method for the recycling of a battery cell from a battery module in accordance with one of the preceding claims, **characterised in that**, the junction (23) is cut out, and the battery cell is mounted in a further mounting (28) of a further battery module, and is guided through the further mounting (28) to a head side of the further battery module, wherein the contact tab (22, 24, 25, 26) is at least partially elongated, and is connected to contact tabs (22, 24, 25, 26) of further battery modules at a further junction (33).

8. A method for the manufacture of a battery module, wherein a stack of flat battery cells, each of which has a contact tab (22, 24, 25, 26), is mounted in a mounting (1), and the contact tabs (22, 24, 25, 26) are guided through the mounting (1) to a head side of the battery module, and connected to each other at a junction (23), **characterised in that**, the contact tabs (22, 24, 25, 26) are routed from the battery cells to the junction (23) such that, at least in some sections, they move away from the junction (23).

9. The method in accordance with the preceding claim, **characterised in that**, a spacer element (2, 3, 4, 5, 6) and one of the battery cells are placed alternately on top of each other, in such a way that the spacer elements (2, 3, 4, 5, 6) form the mounting (1), and the battery cells are held in spaces between neighbouring spacer elements (2, 3, 4, 5, 6).

10. The method in accordance with the preceding claim, **characterised in that**, neighbouring spacer elements (2, 3, 4, 5, 6) in each case define a channel for one of the contact tabs (22, 24, 25, 26), wherein the contact tab (22, 24, 25, 26), by the positioning of the spacer elements (2, 3, 4, 5, 6) on top of each other, is forced in the direction away from the junction (23).

## Revendications

1. Module de batterie avec un empilage de cellules de batterie plates et un support (1) pour les cellules de batterie, sachant que chacune des cellules de batterie comporte un drapeau de contact (22, 24, 25, 26), qui est passé à travers le support (1) vers un côté tête du module de batterie et sachant que les drapeaux de contact (22, 24, 25, 26) sont reliés entre eux sur le côté tête à un emplacement de liaison (23), ***caractérisé en ce que*** les drapeaux de contact (22, 24, 25, 26) s'éloignent au moins par endroits de l'emplacement de liaison (23) en partant des cellules de batterie vers l'emplacement de liaison (23).

2. Module de batterie selon la revendication précédente, ***caractérisé en ce que*** le support (1) est composé d'un empilage d'éléments intercalaires (2, 3, 4, 5, 6), sachant qu'une des cellules de batterie est respectivement maintenue dans les espaces intermédiaires entre les éléments intercalaires voisins (2, 3, 4, 5, 6).

3. Module de batterie selon la revendication précédente, ***caractérisé en ce que*** les éléments intercalaires voisins (2, 3, 4, 5, 6) délimitent respectivement un conduit pour un des drapeaux de contact (22, 24, 25, 26), qui guide le drapeau de contact (22, 24, 25, 26).

4. Module de batterie selon l'une quelconque des revendications précédentes, ***caractérisé en ce que*** les cellules de batterie sont des accumulateurs lithium-ion.

5. Module de batterie selon l'une quelconque des revendications précédentes, ***caractérisé en ce que*** des drapeaux de contact (22, 24, 25, 26) sont à chaque fois reliées entre eux en allant jusqu'à quatre cellules de batterie.

6. Module de batterie selon l'une quelconque des revendications précédentes, ***caractérisé en ce que*** les drapeaux de contact (22, 24, 25, 26) sont soudés les uns aux autres à l'emplacement de liaison (23).

7. Procédé pour le recyclage d'une cellule de batterie à partir d'un module de batterie selon l'une quelconque des revendications précédentes, ***caractérisé en ce que*** l'emplacement de liaison (23) est découpé et la cellule de batterie est maintenue dans un autre support (28) d'un autre module de batterie et est guidée à travers l'autre support (28) vers un côté tête de l'autre module de batterie, sachant que le drapeau de contact (22, 24, 25, 26) est étendue au moins en partie et est reliée sur un autre emplacement de liaison (33) aux drapeaux de contact (22, 24, 25, 26).

8. Procédé de fabrication d'un module de batterie, sachant qu'un empilage de cellules de batterie plates, qui comportent respectivement un drapeau de contact (22, 24, 25, 26), est maintenue dans un support (1) et les drapeaux de contact (22, 24, 25, 26) sont guidés à travers le support (1) vers un côté tête du module de batterie et sont reliés entre eux à un emplacement de liaison (23), ***caractérisé en ce que*** les drapeaux de contact (22, 24, 25, 26) sont posés au moins par endroits s'éloignant de l'emplacement de liaison (23) en partant des cellules de batterie vers l'emplacement de liaison (23).

9. Procédé selon la revendication précédente, ***caractérisé en ce qu'***un élément intercalaire (2, 3, 4, 5, 6) et une des cellules de batterie sont respectivement posés en alternance l'un sur l'autre de telle manière que les éléments intercalaires voisins (2, 3, 4, 5, 6) forment le support (1) et les cellules de batterie sont maintenues dans les espaces intermédiaires entre les éléments intercalaires voisins (2, 3, 4, 5, 6).

10. Procédé selon la revendication précédente, ***caractérisé en ce que*** les éléments intercalaires voisins (2, 3, 4, 5, 6) délimitent respectivement un conduit pour un des drapeaux de contact (22, 24, 25, 26), sachant que le drapeau de contact (22, 24, 25, 26) est forcée par la superposition des éléments intercalaires voisins (2, 3, 4, 5, 6) dans la direction s'éloignant de l'emplacement de liaison (23).
